(19)

**Europäisches Patentamt**
**European Patent Office**
**Office européen des brevets**

(11) **EP 4 622 079 A1**

(12) **EUROPEAN PATENT APPLICATION**

(43) Date of publication:
**24.09.2025  Bulletin 2025/39**

(21) Application number: **24164362.6**

(22) Date of filing: **19.03.2024**

(51) International Patent Classification (IPC):
**H02M 1/42** *(2007.01)*

(52) Cooperative Patent Classification (CPC):
**H02M 1/4241; H02M 1/4233; H02M 1/4258; H02M 1/0058**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Tridonic GmbH & Co. KG**
**6851 Dornbirn (AT)**

(72) Inventors:
- **Auer, Hans**
  **6851 Dornbirn (AT)**
- **Kucera, Clemens**
  **6851 Dornbirn (AT)**

(74) Representative: **Rupp, Christian**
**Mitscherlich PartmbB**
**Patent- und Rechtsanwälte**
**Karlstraße 7**
**80333 München (DE)**

(54) **A RESONANT POWER FACTOR CORRECTION (PFC) CONVERTER**

(57)     Disclosed is a resonant power factor correction, PFC, converter (1), comprising a transformer (101, *Tr2*) configured to isolate an input circuit (*102*) and an output circuit (*103*) of the converter (7), the input circuit (*102*) comprising an input capacitance (*104, C2*), configured to level out a rectified mains voltage (*401, Vin*) of the converter (7); a high-side, HS, switch (*105*) and a low-side, LS, switch (*106*) connected in series and arranged in parallel to the input capacitance (*104, C2*); and a resonant tank circuit (*107, Ls, Ls1, Ls2, Cs, Cp*), connected between the transformer (101, *Tr2*) and a common terminal of the HS switch (*105*) and the LS switch (*106*). The converter (1) further comprises a first sensing circuit (*108, R7, R8*), configured to sense the rectified mains voltage (*401, Vin*); a second sensing circuit (*109, R9, R10, Tr2a*), configured to sense an output voltage (*402, Vout*) of the converter (7); a third sensing circuit (*110, Tr3*), configured to sense a rectified resonant current (*404, Ires_rect*) of the resonant tank circuit 107); and a control circuit (2, *Controller*). The control circuit (2, *Controller*) is configured to determine a control variable (*405, Vref*) for regulation of the output voltage (*402, Vout*) in accordance with a given setpoint (*406, Vout_ref*); determine a threshold variable (*407, Ires_ref*) for the rectified resonant current (*404, Ires_rect*) in accordance with the control variable (*405, Vref*) and the rectified mains voltage (*401, Vin*); determine a first compare result (*408, CMP1*) in accordance with the rectified resonant current (*404, Ires_rect*) and its threshold variable (*407, Ires_ref*); and drive the HS switch (*105*) and the LS switch (*106*) in turns in accordance with a state machine (3) being stimulated through the first compare result (*408, CMP1*). The converter (1) is especially suitable for higher power input.

FIG. 4

## Description

### Technical Field

The present disclosure relates generally to the field of lighting technology, and in particular to a resonant PFC converter, a driver comprising said converter, and a luminaire comprising said driver.

### Background Art

State of the art isolated PFC converters are typically based on a Flyback circuit topology, which operates inefficiently at higher power input (such as above 60W) and higher frequency.

State of the art resonant PFC converters do operate efficiently at higher power (and higher frequency) due to their soft-switching characteristics, but regarding their control mechanisms only vague details are disclosed. Those that do reveal a rudimentary two-point frequency control based on the input voltage level, or a peak control scheme in open-loop operation.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a resonant power factor correction, PFC, converter is provided, comprising a transformer configured to isolate an input circuit and an output circuit of the converter, the input circuit comprising an input capacitance, configured to level out a rectified mains voltage of the converter, a high-side, HS, switch and a low-side, LS, switch connected in series and arranged in parallel to the input capacitance, and a resonant tank circuit, connected between the transformer and a common terminal of the HS switch and the LS switch. The converter further comprises a first sensing circuit, configured to sense the rectified mains voltage, a second sensing circuit, configured to sense an output voltage of the converter, a third sensing circuit, configured to sense a rectified resonant current of the resonant tank circuit 107), and a control circuit. The control circuit is configured to determine a control variable) for regulation of the output voltage in accordance with a given setpoint, determine a threshold variable for the rectified resonant current in accordance with the control variable and the rectified mains voltage, determine a first compare result in accordance with the rectified resonant current and its threshold variable, and drive the HS switch and the LS switch in turns in accordance with a state machine being stimulated through the first compare result. The converter according to the invention may provide a SELV (safety extra-low voltage) voltage to the LED light source.

The resonant tank circuit may comprise a series capacitance, a series inductance, and a parallel capacitance.

The parallel capacitance may be arranged in the output circuit.

The first sensing circuit may comprise a voltage divider on the rectified mains voltage.

The second sensing circuit may comprise a sense winding of the transformer.

The second sensing circuit may comprise a voltage divider on the output voltage.

The third sensing circuit may comprise a sense transformer interposed in the input circuit.

For driving the HS switch and the LS switch in turns in accordance with a state machine being stimulated through the first compare result, the control circuit may further be configured to turn on the respective non-conductive switch after a lapse of a dead time during commutation of the switches, and turn off the respective conductive switch after a lapse of a delay time following a rising edge of the first compare result.

The delay time may range between 0,1 and 1 ms.

The converter may further comprise a fourth sensing circuit, configured to sense a midpoint voltage across the LS switch, and the control circuit may further be configured to determine a second compare result in accordance with the midpoint voltage and a decision threshold between binary logic levels, and drive the HS switch and the LS switch in turns in accordance with the state machine further being stimulated through the second compare result.

The fourth sensing circuit may comprise a voltage divider on the midpoint voltage.

For driving the HS switch and the LS switch in turns in accordance with the state machine further being stimulated through the second compare result, the control circuit may further be configured to turn on the HS switch after the lapse of the dead time and following a rising edge of the second compare result, and turn on the LS switch after the lapse of the dead time and following a falling edge of the second compare result.

The control circuit may further be configured to turn off the respective conductive switch after a lapse of a timeout following a falling edge of the first compare result.

According to a second aspect, a driver for an LED light source is provided, comprising a resonant PFC converter according to the first aspect which provides a supply voltage for the LED light source. The driver enables an operation where the converter draws a sinusoidal input current and provides a regulated output voltage at the same time. The driver may form an isolated converter providing galvanic isolation and a SELV output voltage for the LED light source.

According to a another aspect, a driver for an LED light source is provided, comprising a resonant PFC converter according to the first aspect, and a DC/DC converter for the LED light source.

According to a third aspect, a luminaire is provided, comprising a driver according to the second aspect, and the LED light source.

**Advantageous Effect(s)**

The proposed isolated peak control LCC PFC accomplishes a closed-loop operation and is especially suitable for higher power input, such as above 60W.

**Brief Description of Drawings**

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIGs. 1-3 illustrate resonant PFC converters in accordance with the present disclosure,

FIG. 4 illustrates details of the control circuit of FIGs. 1 - 3 in accordance with the present disclosure,

FIG. 5 illustrates details of the state machine of FIG. 4 in accordance with the present disclosure, and

FIGs. 6-7 illustrate signal waveforms of the resonant PFC converters of FIGs. 1 - 3 in accordance with the present disclosure.

**Detailed Descriptions of Drawings**

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

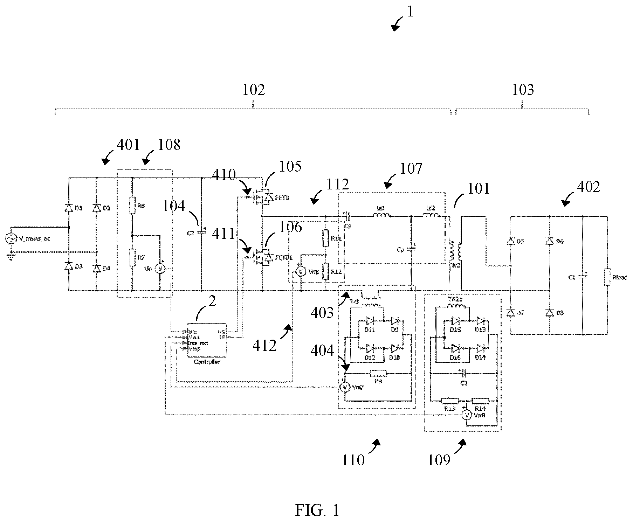

FIGs. 1-3 illustrate resonant PFC converters 1 in accordance with the present disclosure.

Said converters *1* comprise a transformer *101, Tr2* configured to isolate an input circuit *102* and an output circuit *103* of the converter *1*.

The input circuit *102* comprises an input capacitance *104, C2,* configured to level out a rectified mains voltage *401, Vin* of the converter *1*.

The input circuit *102* further comprises a high-side (HS) switch *105* and a low-side (LS) switch *106* connected in series and arranged in parallel to the input capacitance *104, C2.*

The input circuit *102* further comprises a resonant tank circuit *107, Ls, Ls1, Ls2, Cs, Cp,* connected between the transformer *101, Tr2* and a common terminal of the switches *105, 106.*

The resonant tank circuit *107* may comprise a series capacitance *Cs*; a series inductance *Ls1, Ls2, Ls*; and a parallel capacitance *Cp*.

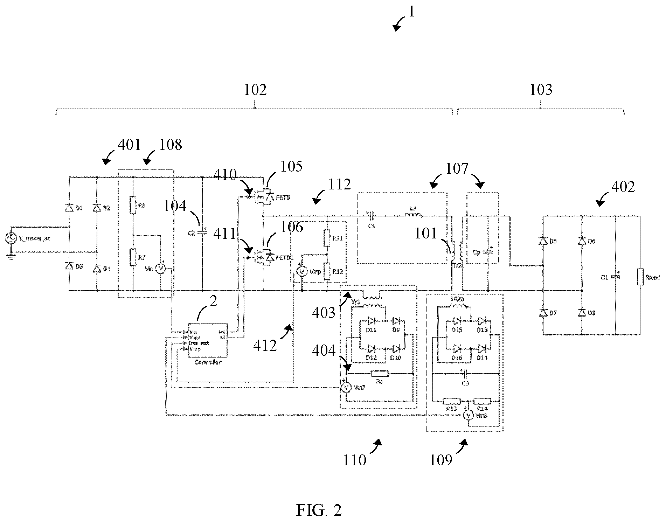

Other orientations of the series inductance *Ls1, Ls2, Ls* and parallel capacitance *Cp* are possible. For example, in accordance with FIGs. 2-3, the parallel capacitance *Cp* may be arranged in the output circuit *103*, which allows for the leakage inductance *Ls2* to be integrated into the transformer 101, *Tr2,* thereby achieving cost and space savings.

The converter *1* further comprises a first sensing circuit *108, R7, R8,* configured to sense the rectified mains voltage *401, Vin.*

In accordance with FIGs. 1-3, the first sensing circuit *108* may comprise a voltage divider *R7, R8* on the rectified mains voltage *401, Vin.*

The converter *1* further comprises a second sensing circuit *109, R9, R10, Tr2a,* configured to sense an output voltage *402, Vout* of the converter *1*.

In accordance with FIGs. 1 - 2, the second sensing circuit *109* may comprise a sense winding *Tr2a* of the transformer *101, Tr2.*

The examples of FIGs. 1 - 2 show an isolated converter providing galvanic isolation and an output voltage *402, Vout* for the LED light source which fulfills the requirements of a SELV voltage (safety extra-low voltage). The output voltage *402, Vout* is preferably in the range of 48 V to 24 V.

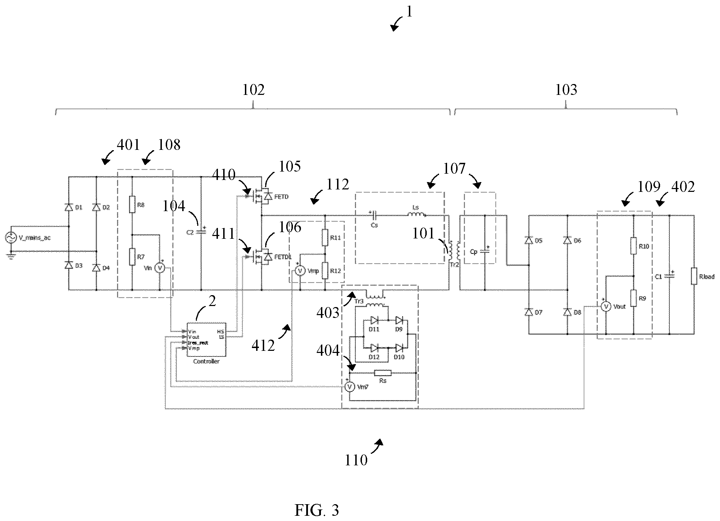

In accordance with FIG. 3, the second sensing circuit *109* may comprise a voltage divider *R9, R10* on the output voltage *402, Vout.* This non-isolated implementation achieves cost and space savings.

The converter *1* further comprises a third sensing circuit *110, Tr3,* configured to sense a rectified resonant current *404, Ires rect* of the resonant tank circuit 107); and a control circuit *2, Controller.*

In accordance with FIGs. 1 - 3, the third sensing circuit *110* may comprise a sense transformer *Tr3* interposed in the input circuit *102.*

The converter *1* may further comprise a fourth sensing circuit *111, R11, R12,* configured to sense a midpoint voltage *412, Vmp* across the LS switch *106.*

Sensing of the midpoint voltage *412, Vmp* enables zero-voltage switching (ZVS) through adaptive dead time control.

The fourth sensing circuit *111* may comprise a voltage divider *R11, R12* on the midpoint voltage *412, Vmp.*

A driver for an LED light source comprises such a resonant PFC converter *1* which provides a regulated output voltage *402, Vout* for the LED light source. The LED light source may comprise a linear regulator for regulation of the LED current.

A driver for an LED light source comprises such a resonant PFC converter *1* and an optional DC/DC converter for the LED light source.

A luminaire comprises said driver and the LED light source.

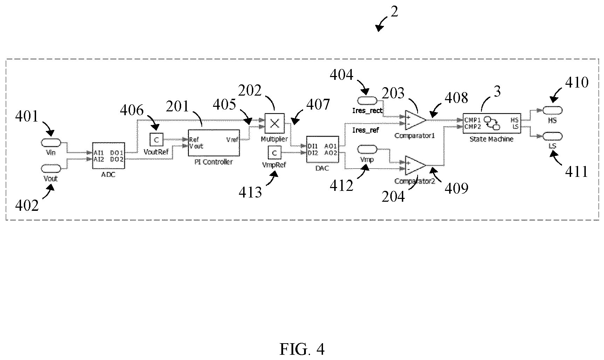

FIG. 4 illustrates details of the control circuit 2 of FIGs. 1 - 3 in accordance with the present disclosure.

Signal processing can be either analog or digital.

In accordance with the implementation of FIG. 4, the rectified mains voltage *401, Vin* and the output voltage *402, Vout* of the converter *1* are passed through an analog/digital converter (ADC), and a digital controller *201* of the control circuit *2, Controller* is configured to determine a control variable *405, Vref* for closed-loop control (i.e., regulation) of the output voltage *402, Vout* in accordance with a given setpoint *406, Vout_ref*:

$$e(t) = V_{out\_ref} - V_{out}$$

$$V_{ref} = K_P \left( e(t) + \frac{1}{T_I} \int_0^t e(\tau)\, d\tau \right)$$

Said control variable *405, Vref* is then passed to a multiplier 202 which is configured to determine a product of the control variable *405, Vref* and the rectified mains voltage *401, Vin.* This product constitutes a threshold variable *407, Ires_ref* for the rectified resonant current *404, Ires_rect* in accordance with the control variable

*405, Vref* and the rectified mains voltage *401, Vin*:

$$I_{res\_ref} = V_{ref} \cdot V_{in}$$

Having the threshold variable *407, Ires_ref* proportional to the rectified mains voltage *401, Vin* guarantees that the converter *1* draws a sinusoidal input current yielding excellent Power Factor (PF) and Total Harmonic Distortion (THD). At the same time, the converter *1* provides a regulated output voltage 402.

Said threshold variable *407, Ires_ref* is then passed through a digital/analog converter (DAC), to the input of a first comparator 203 of the control circuit *2, Controller,* which is configured to determine a first compare result *408, CMP1* in accordance with the rectified resonant current *404, Ires_rect* and its threshold variable *407, Ires_ref.*

According to FIG. 4, a decision threshold *413, Vmp_ref* between binary logic levels may then be passed to the input of a second comparator 203 of the control circuit *2, Controller,* which is configured to determine a second compare result *409, CMP2* in accordance with the midpoint voltage *412, Vmp* and the decision threshold *413, Vmp_ref.*

The second compare result *409, CMP2* prevents the switches *105, 106* from turning on if the midpoint voltage *412, Vmp* has incorrect polarity

The control circuit *2, Controller* is further configured to drive the switches *105, 106* in turns in accordance with a state machine *3* being stimulated through the first compare result *408, CMP1* and optionally through the second compare result *409, CMP2.*

The switches *105, 106* may be driven in turns via the signals *410, HS(_in)* and *411, LS(_in),* respectively.

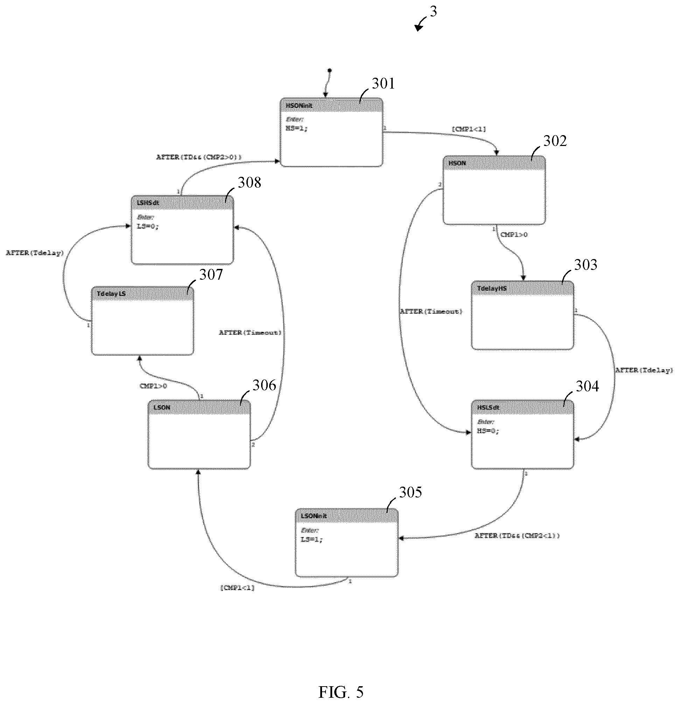

FIG. 5 illustrates details of the state machine 3 of FIG. 4 in accordance with the present disclosure.

States 301 - 304 on the right side of FIG. 5 are traversed during a conduction phase of the HS switch *105.*

State 301 (*"HSONinit"*) may be reached from state 308 after a lapse of a dead time *td* during commutation of the switches 105, 106. The dead time *td* is the dead time between the HS and LS drive signals. The state involves turning on the HS switch *105* (*"HS=1 "*).

So, for driving the switches *105, 106* in turns, the control circuit *2, Controller* may be configured to turn on the respective non-conductive switch *105, 106* after a lapse of the dead time *td* (see transitions *304→305* and *308→301*) during commutation of the switches *105, 106.*

In particular, the control circuit *2, Controller* may further be configured to turn on the HS switch *105* (see state *301*) after the lapse of the dead time *td* and optionally following a rising edge *CMP2>0* (see transition *308→ 301*) of the second compare result *409, CMP2.* That is, the drive signal *410, HS(_in)* is allowed to go high when the midpoint voltage *412, Vmp* is high.

State 302 (*"HSON"*) may be reached from state 301 following a falling edge of the first compare result *408, CMP1* (*"CMP1<1"*).

State 303 (*"TdelayHS"*) may be reached from state 302 following a rising edge of the first compare result *408, CMP1* (*"CMP1>0"*).

State 304 (*"HSLSdt"*) may be reached from state 303 after a lapse of a delay time *Tdelay* (which may range between 0,1 and 1 ms, in particular). In other words, *Tdelay* passes after CMP1 goes high. Alternatively, state 304 may be reached from state 302 after a lapse of a timeout. The state involves turning off the HS switch *105* (*"HS=0"*). Said timeout prevents lockout from occurring in case a peak is delayed or not detected.

So, for driving the switches *105, 106* in turns, the control circuit *2, Controller* may further be configured to turn off the respective conductive switch *105, 106* after a lapse of a delay time *Tdelay* (see transitions *303→304* and *307→308*) following a rising edge *CMP1>0* of the first compare result *408, CMP1* (see transitions *302→303* and *306→307*).

States 305 - 308 on the left side of FIG. 5 are passed through during a conduction phase of the LS switch *106*.

State 305 (*"LSONinit"*) may be reached from state 304 after a lapse of a dead time *td* during commutation of the switches 105, 106. State 305 involves turning on the LS switch *1056* (*"LS=1"*).

So, for driving the switches *105, 106* in turns, the control circuit *2, Controller* may further be configured to turn on the respective non-conductive switch *105, 106* after a lapse of a dead time *td* (see transitions *304→305* and *308→301*) during commutation of the switches *105, 106*.

In particular, the control circuit *2, Controller* may further be configured to turn on the LS switch *106* after the lapse of the dead time *td* and optionally following a falling edge *CMP2<1* of the second compare result *409, CMP2* (see transition *304→305*). That is, the drive signal *411, LS(_in)* is allowed to go high when the midpoint voltage *412, Vmp* is low.

State 306 (*"LSON"*) may be reached from state 305 following a falling edge of the first compare result *408, CMP1* (*"CMP1<1 "*).

State 307 (*"TdelayLS"*) may be reached from state 306 following a rising edge of the first compare result *408, CMP1* (*"CMP1>0"*).

State 308 (*"LSHSdt"*) may be reached from state 307 after a lapse of a delay time *Tdelay*. As such, *Tdelay* passes after CMP1 goes high. Alternatively, state 308 may be reached from state 306 after a lapse of the timeout. The state involves turning off the LS switch *106* (*"LS=0"*).

So, for driving the switches *105, 106* in turns in accordance with a state machine *3* being stimulated through the first compare result *408, CMP1*, the control circuit *2, Controller* may further be configured to turn off the respective conductive switch *105, 106* after a lapse of a delay time *Tdelay* (see transitions *303→304* and *307→308*) following a rising edge *CMP1>0* of the first compare result *408, CMP1* (see transitions *302→303* and *306→307*).

In summary, the control circuit *2, Controller* may be configured to turn off the respective conductive switch *105, 106* (see states *304* or *308*) after a lapse of a timeout (see transitions *304→302* and *308→306*) and following a falling edge *CMP1<1* of the first compare result *408, CMP1* (see transitions *301→302* and *306→305*).

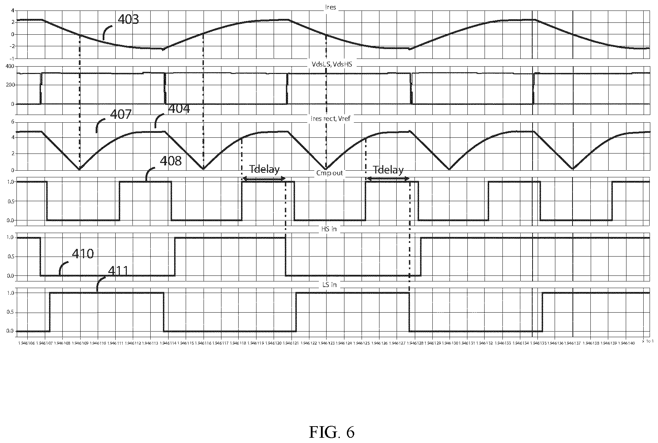

FIGs. 6-7 illustrate signal waveforms of the resonant PFC converters 1 of FIGs. 1 - 3 in accordance with the present disclosure.

With reference to FIG. 6, a first / top graph shows a waveform of the resonant current *404, Ires,* and a third graph shows a waveform of the rectified resonant current *404, Ires_rect* as well as a waveform of its threshold variable *407, Ires_ref*. The fourth graph shows a resulting waveform of the first compare result *408, CMP1*.

Note that a rising edge *CMP1>0* of the first compare result *408, CMP1* means that the rectified resonant current *404, Ires rect* has reached its threshold variable *407, Ires_ref*.

*Tdelay* is the delay time between the time instant at which the rectified resonant current *404, Ires rect* reaches its threshold variable *407, Ires_ref* and the time instant when the respective conductive switch *105, 106* is turned off. This delay is on the order of a few hundred ns and ensures stabile control and proper resonant half-bridge operation.

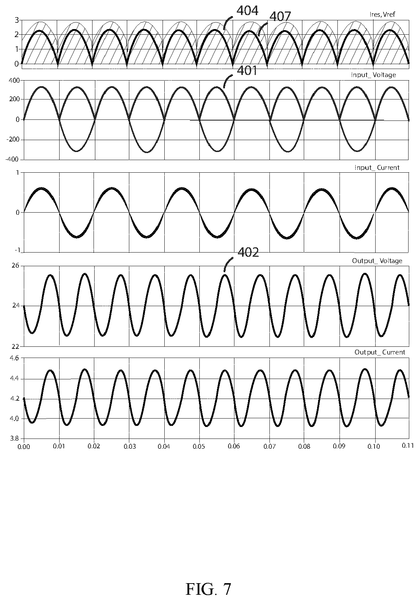

With reference to FIG. 7, a first / top graph shows waveforms of the rectified resonant current *404, Ires_rect* and its threshold variable *407, Ires_ref,* and a second graph shows a waveform of the rectified mains / input voltage *401, Vin*.

Note the alignment of the rectified mains / input voltage *401, Vin* in the second graph and the input current depicted in the third graph, resulting in excellent PF and THD.

A fourth and fifth graph show waveforms of the resulting output voltage *402* and output current, respectively, having residual ripple.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. A resonant power factor correction, PFC, converter (*1*), comprising

   - a transformer (*101, Tr2*), configured to isolate an input circuit (*102*) and an output circuit (*103*) of the converter (*1*), the input circuit (*102*) comprising

      - an input capacitance (*104, C2*), configured to level out a rectified mains voltage (*401, Vin*) of the converter (*1*);
      - a high-side, HS, switch (*105*) and a low-side, LS, switch (*106*) connected in series and arranged in parallel to the input capacitance (*104, C2*); and
      - a resonant tank circuit (*107, Ls, Ls1, Ls2, Cs, Cp*), connected between the transformer (*101, Tr2*) and a common terminal of the switches (*105, 106*);

   - a first sensing circuit (*108, R7, R8*), configured to sense the rectified mains voltage (*401, Vin*);
   - a second sensing circuit (*109, R9, R10, Tr2a*), configured to sense an output voltage (*402, Vout*) of the converter (*1*);
   - a third sensing circuit (*110, Tr3*), configured to sense a rectified resonant current (*404, Ires rect*) of the resonant tank circuit 107); and
   - a control circuit (*2, Controller*), configured to

      - determine a control variable (*405, Vref = PI (Vout, Vout_ref*)) for regulation of the output voltage (*402, Vout = Vout_ref*) in accordance with a given setpoint (*406, Vout_ref*);
      - determine a threshold variable (*407, Ires_ref = Vref\*Vin*) for the rectified resonant current (*404, Ires_rect*) in accordance with the control variable (*405, Vref*) and the rectified mains voltage (*401, Vin*);
      - determine a first compare result (*408, CMP1*) in accordance with the rectified resonant current (*404, Ires_rect*) and its threshold variable (*407, Ires_ref*); and
      - drive the switches (*105, 106*) in turns in accordance with a state machine (*3*) being stimulated through the first compare result (*408, CMP1*).

2. The converter (*1*) of claim 1,

   the resonant tank circuit (*107*) comprising

      - a series capacitance (*Cs*);
      - a series inductance (*Ls1, Ls2, Ls*); and
      - a parallel capacitance (*Cp*).

3. The converter (*1*) of claim 2,
   the parallel capacitance (*Cp*) being arranged in the output circuit (*103*).

4. The converter (*1*) of any one of the preceding claims, the first sensing circuit (*108*) comprising a voltage divider (*R7, R8*) on the rectified mains voltage (*401, Vin*).

5. The converter (*1*) of any one of the claims 1-4, the second sensing circuit (*109*) comprising a sense winding (*Tr2a*) of the transformer (*101, Tr2*).

6. The converter (*1*) of any one of the claims 1-4, the second sensing circuit (*109*) comprising a voltage divider (*R9, R10*) on the output voltage (*402, Vout*).

7. The converter (*1*) of any one of the preceding claims, the third sensing circuit (*110*) comprising a sense transformer (*Tr3*) interposed in the input circuit (*102*).

8. The converter (*1*) of any one of the preceding claims, wherein for driving the switches (*105, 106*) in turns in accordance with a state machine (*3*) being stimulated through the first compare result (*408, CMP1*), the control circuit (*2, Controller*) is further configured to

   - turn on the respective non-conductive switch (*105, 106*) after a lapse of a dead time (*td*) during commutation of the switches (*105, 106*); and
   - turn off the respective conductive switch (*105, 106*) after a lapse of a delay time (*tdelay*) following a rising edge (*CMP1>0*) of the first compare result (*408, CMP1*).

9. The converter (*1*) of claim 8,
   the delay time (*tdelay*) ranging between 0,1 and 1 ms.

10. The converter (*1*) of any one of the preceding claims, further comprising

    - a fourth sensing circuit (*111, R11, R12*), configured to sense a midpoint voltage (*412, Vmp*) across the LS switch (*106*);

    the control circuit (*2, Controller*) further configured to

       - determine a second compare result (*409, CMP2*) in accordance with the midpoint voltage (*412, Vmp*) and a decision threshold (*413, Vmpref*) between binary logic levels; and
- drive the switches (*105, 106*) in turns in accordance with the state machine (*3*) further being stimulated through the second compare result (*409, CMP2*).

11. The converter (*1*) of claim 10,
the fourth sensing circuit (*111*) comprising a voltage divider (*R11, R12*) on the midpoint voltage (*Vmp*).

12. The converter (*1*) of claim 10 or claim 11,
wherein for driving the switches (*105, 106*) in turns in accordance with the state machine (*3*) further being stimulated through the second compare result (*409, CMP2*), the control circuit (*2, Controller*) is further configured to

- turn on the HS switch (*105*) after the lapse of the dead time (*td*) and following a rising edge (*CMP2>0*) of the second compare result (*409, CMP2*); and
- turn on the LS switch (*106*) after the lapse of the dead time (*td*) and following a falling edge (*CMP2<1*) of the second compare result (*409, CMP2*).

13. The converter (*1*) of any one of the preceding claims,
the control circuit (*2, Controller*) further being configured to

- turn off the respective conductive switch (*105, 106*) after a lapse of a timeout (*Timeout*) following a falling edge (*CMP1<1*) of the first compare result (*408, CMP1*).

14. A driver for an LED light source, comprising

- a resonant PFC converter (*1*) according to any one of the preceding claims; and
- preferably a DC/DC converter for the LED light source.

15. A luminaire, comprising

- a driver according to claim 14; and
- the LED light source.

FIG. 1

FIG. 2

FIG. 3

FIG. 4

3

**HSONinit** 301
*Enter:*
HS=1;

[CMP1<1]

**HSON** 302

CMP1>0

**TdelayHS** 303

AFTER(Tdelay)

**HSLSdt** 304
*Enter:*
HS=0;

AFTER(Timeout)

AFTER(TD&&(CMP2<1)) → **LSONinit** 305
*Enter:*
LS=1;

[CMP1<1]

**LSON** 306

CMP1>0

**Tdelay LS** 307

AFTER(Tdelay)

**LSHSdt** 308
*Enter:*
LS=0;

AFTER(TD&&(CMP2>0))

AFTER(Timeout)

FIG. 5

FIG. 6

FIG. 7

Europäisches
Patentamt

European
Patent Office

Office européen
des brevets

# EUROPEAN SEARCH REPORT

**Application Number**

EP 24 16 4362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 961 728 B2 (PHILIPS LIGHTING HOLDING BV [NL]) 1 May 2018 (2018-05-01) <br> * column 6, lines 9-28 * <br> * column 8, lines 16-39 * <br> * figure 4 * | 1-15 | INV. <br> H02M1/42 |
| Y | US 10 172 191 B2 (TRIDONIC GMBH & CO KG [AT]) 1 January 2019 (2019-01-01) <br> * paragraphs [0040], [0041]; figures 1,2 * | 1-15 | |
| A | WO 2014/060872 A1 (KONINKL PHILIPS NV [NL]) 24 April 2014 (2014-04-24) <br> * page 7, line 3 - page 9, line 2; figure 1 * | 1-15 | |
| A | US 2011/261593 A1 (PAN SHANGZHI [CA] ET AL) 27 October 2011 (2011-10-27) <br> * figure 3(a) * | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 23 August 2024 | Standaert, Frans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**

EP 24 16 4362

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2024

| Patent document cited in search report | | Publication date | Patent family member(s) | | Publication date |
|---|---|---|---|---|---|
| US 9961728 | B2 | 01-05-2018 | CN | 106575917 A | 19-04-2017 |
| | | | EP | 3178296 A2 | 14-06-2017 |
| | | | JP | 6588531 B2 | 09-10-2019 |
| | | | JP | 2017523580 A | 17-08-2017 |
| | | | US | 2017223792 A1 | 03-08-2017 |
| | | | WO | 2016020213 A2 | 11-02-2016 |
| US 10172191 | B2 | 01-01-2019 | AT | 15986 U1 | 15-10-2018 |
| | | | DE | 102014225600 A1 | 16-06-2016 |
| | | | EP | 3231253 A1 | 18-10-2017 |
| | | | US | 2017325299 A1 | 09-11-2017 |
| | | | WO | 2016091568 A1 | 16-06-2016 |
| WO 2014060872 | A1 | 24-04-2014 | NONE | | |
| US 2011261593 | A1 | 27-10-2011 | AU | 2011245032 B2 | 23-06-2016 |
| | | | BR | 112012027568 A2 | 02-08-2016 |
| | | | CA | 2796985 A1 | 03-11-2011 |
| | | | CN | 102918760 A | 06-02-2013 |
| | | | EP | 2564502 A1 | 06-03-2013 |
| | | | JP | 6006717 B2 | 12-10-2016 |
| | | | JP | 2013526253 A | 20-06-2013 |
| | | | US | 2011261593 A1 | 27-10-2011 |
| | | | WO | 2011134057 A1 | 03-11-2011 |

EPO FORM P0459

For more details about this annex : see Official Journal of the European Patent Office, No. 12/82